# EUROPÄISCHE PATENTSCHRIFT

(11) **EP 2 102 083 B1**
(45) Veröffentlichungstag und Bekanntmachung des Hinweises auf die Patenterteilung: **10.03.2010**
(21) Anmeldenummer: 07700194.9
(22) Anmeldetag: 08.01.2007
(51) Int. Cl.: B65G 53/24, B65G 67/24, B65G 67/08

(54) **BE- UND ENTLADEVORRICHTUNG FÜR BEHÄLTNISSE, WIE CONTAINER, SILOS UND ANDERE FÜLLRÄUME**
LOADING AND UNLOADING DEVICE FOR RECEPTACLES, SUCH AS CONTAINERS, SILOS AND OTHER FILLING SPACES
DISPOSITIF DE CHARGEMENT ET DE DÉCHARGEMENT POUR CONTENANTS, TELS QUE CONTENEURS, SILOS ET AUTRES ESPACES DE REMPLISSAGE

(30) Priorität: 20.12.2006 DE 202006019188 U
(43) Veröffentlichungstag der Anmeldung: 23.09.2009
(73) Patentinhaber: Hanses, Christian, 56244 Sessenhausen (DE)
(72) Erfinder: Hanses, Christian, 56244 Sessenhausen (DE)
(74) Vertreter: Aue, Hans-Peter
(86) Internationale Anmeldenummer: PCT/EP2007/000083
(87) Internationale Veröffentlichungsnummer: WO 2008/083705

(56) Entgegenhaltungen:
- WO-A-01/25124
- DE-A1- 4 431 063
- US-A- 4 659 262
- US-B1- 6 415 909

## Beschreibung

Die Erfindung bezieht sich auf eine Be- und Entladevorrichtung für Behältnisse, wie Container, Silos und andere Füllräume nach dem Oberbegriff des Anspruchs 1.

Seit langem werden Schüttgüter in genormten Behältern transportiert. Man ist dabei bestrebt, Schüttgüter in genormte Ladehilfsmittel zu füllen und für den Transport auf Lastkraftwagen, Bahn oder Schiffen zu befördern. Als Ladehilfsmittels sind besonders Container geeignet. Diese Container sind Großraunbehälter zur Lagerung und zum Transport von Gütern, die robust gebaut und genügend widerstandsfähig sind, um wiederholte Verwendung durch mehrere Verkehrs- und Fördermittel ohne Umladen des Inhalts zu gestatten. Sie existieren in den verschiedensten Größen und sind in der Regel genormt.

Ferner haben sie Einrichtungen zum leichten Umschlagen von einem Beförderungsmittel in das Andere. Die so genannten ISO-Container stellen den bekanntesten und wichtigsten Containertyp dar. Dies sind meistens 20- oder 40-Fuß-Seecontainer. In ihnen wird ein großer Teil des Warenhandels abgewickelt. Von Vorteil ist hier, dass die Container wegen ihrer genormten Form mit den verschiedensten Transportmitteln, wie Seeschiffe, Binnenschiffe, Eisenbahn und Lastkraftwagen, befördert werden können und schnell umgeschlagen werden.

Häufig wird Schüttgut auch in Silos und Bunkern gelagert, aus denen es entnommen und in solche Container gefüllt werden muss. Typische Schüttgüter sind, Baustoffe, wie Oberboden, Sand, Kies, Schotter, Zement, andere mineralische Güter, wie Erz, Streusalz, und Lebensmittel, wie Getreide, Zucker, Speisesalz, Kaffee, Mehl, sowie pulverförmige Güter wie Pigmente, Füllstoffe, Granulate, Pellets usw..

Schüttgüter werden oft auch in Silos oder Bunkern gelagert. Beim Transport unterscheidet man kontinuierlichen, also ununterbrochen fließenden Transport, z.B. Muldengurtförderer und Becherwerke, sowie pneumatischfluide Förderung in Luftströmen z.B. in Schüttgut-Räumen oder -Bunkern von Schiffen, in Mulden- und Hochbordfahrzeugen, Silowagen, Lastkraftwagen, Eisenbahn usw., in Säcken oder Big Bags als Transportbehältnisse für leichte stückige Güter oder Schüttgüter.

Der Verlade- und Transportprozess von Schüttgut unterliegt einer aufwändigen und vielfältigen Prozedur. Beispielhaft wird nachfolgend ein solches Verlade- und Transportverfahren beschrieben.

Zunächst wird beispielsweise ein Kippsiloauflieger, gezogen durch eine Sattelzugmaschine mit eingebautem Luftkompressor, mittels Luftdruck mit Schüttgut z.B. aus einem Hochsilo beladen. Anschließend erfolgt der Transport über die Strasse zur Verpackungsindustrie. Nun erfolgt die Entladung des Kippsiloaufliegers in die stationären Lagersilos des Verpackungsbetriebes. Dann findet die Absackung des Schüttgutes in Big Bags oder Säcke statt. Die abgesackte Ware oder die Big Bags werden über die Strasse zum Hafen transportiert, wo eine manuelle Beladung des Seecontainers im Hafen erfolgt. Dabei werden beispielsweise Big Bags per Gabelstapler in Container verladen. Danach wird der Container auf ein Containerschiff verladen.

Dieses Verfahren kann natürlich in vielfältiger Weise erfolgen, z.B. Verladung von Lastkraftwagen auf Eisenbahnwaggons, von diesen auf Schiffe, von Schiffen auf Lastkraftwagen usw..

Es hat sich dabei gezeigt, dass erhebliche Defizite in den bisherigen Verfahren bezüglich unnötiger Transportwege, zu aufwendige Verpackung, fehlender Informationsfluss sowie Kommunikation der Verlade- und Transportstufen untereinander vorliegen. Der Verlade- und Transportprozess ist somit umständlich, aufwändig und kostenintensiv. Darüber hinaus wird bei der konventionellen Beladung von Containern mittels Big Bags, Säcken oder loser Verladung mittels Förderband bzw. Schnecke eine Ausnutzung seines Volumens und seiner Tonnage nicht erreicht.

Des Weiteren ist aus der US-B1-6 415 909 als nächstliegender Stand der Technik eine Be- und Entladevorrichtung für Behältnisse, wie Container, Silos und andere Füllräume mit Schüttgut bekannt, welche mobil ausgebildet ist und eine Bedien- und Steuereinheit umfasst. Ferner weist der Förderweg einen vertikalen Abschnitt und einen dazu hinragenden horizontalen Abschnitt auf. Ein Endlosstrang führt um den Förderweg entlang. Das Schüttgut wird in den Förderweg am unteren Ende des vertikalen Abschnittes eingebracht und am Ende des horizontalen Abschnittes ausgestoßen.

In der bisherigen Verlade- und Transportstruktur, nämlich Produktion der losen Güter, Verladen loser Güter in Kipper oder Siloauflieger, Transport zur Verpackungsindustrie, Transport der verpackten Güter zum Seehafen, Verladung der Güter in Container und Schiffstransport zum Ziel, liegt ein erhebliches Potenzial, um Ressourcen schonend und Zeit optimierend eine erheblich höhere Allokationseffizienz zu erzielen.

Es ist Aufgabe der Erfindung, eine Be- und Entladevorrichtung für Behältnisse der eingangs genannten Art zu schaffen, welche die Ladung und den Transport effizienter gestaltet, indem Be- und Verladestufen sowie Transportwege einspart werden.

Erfindungsgemäß wird die Aufgabe dadurch gelöst, dass diese mobil ausgebildet ist, wobei auf einer mit Lastkraftwagen transportierbaren Wechselbrücke ein Container angeordnet ist, dessen eine Stirnseite zu öffnen und zu schließen und an ein zu be- oder entladenden Behältnis für Schüttgut abdichtend anlegbar ist, wobei in dem Container zumindest ein in das zu be- oder entladenden Behältnis teleskopierbarers Rohr mit einem zugehörigen Antriebsaggregat und einem Anschluss zum Fördern von Schüttgut in das oder aus dem zu be- oder entladenden Behältnis, eine Saugeinheit mit Treibluftausgang, eine Motor-Kompressor-Einheit mit Treiblufteingang zur Druckluftspeisung in das zu be- oder entladenden Behältnis, eine Staubsaug- und Filteranlage und eine Bedien- und Steuereinheit angeordnet sind gemäß Anspruch 1.

Der wesentliche Vorteil der Erfindung besteht in der Mobilität der Be- und Entladevorrichtung, d.h. der Transportierbarkeit von einem Ort zu einem anderen und zwar problemlos mit einem einfachen Standard-Lastkraftwagen, der die Wechselbrücke mit dem darauf befindlichen Container aufnehmen kann. Somit ist die mobile Be- und Entladevorrichtung für Behältnisse, wie Container, Silos und andere Füllräume hervorragend geeignet, an beliebigen Orten, auch unter schwierigsten Umfeldbedingungen, eingesetzt zu werden, ohne dass entsprechende feste Anlagen aufwändig und kostenintensiv errichtet werden müssen. Gerade in Anwendungsfällen, bei denen Schüttgut nur einmal oder wenige Male be- oder entladen und transportiert werden müssen, ist der Einsatz einer solchen mobilen Be- und Entladevorrichtung besonders wirtschaftlich. Dabei sind alle für eine Be- oder Entladung eines Behältnisses mit Schüttgut notwendigen Apparaturen in der erfindungsgemäßen mobilen Be- und Entladevorrichtung vorhanden und auf relativ kleinem Raum untergebracht.

Die Be- und Entladung von Behältnissen mit Schüttgut aller Art erfolgt somit direkt beispielsweise von einem Schüttgut lagernden Silo mittels der Be- und Entladevorrichtung in einen Schüttgutcontainer und dessen Transport mit einem Lastkraftwagen zu einem Schiff und umgekehrt. So können etwa Schüttgüter direkt aus einem Kipp-SiloAuflieger oder lose auf Halde liegend in einen 20- oder 40-Fuß-Seecontainer ortsunabhängig verladen werden, z.B. an der Produktionsstätte des losen Gutes selbst, an der Lagerstätte, nämlich der auf Halde befindlichen losen Güter, am Bahnhof oder am Hafen. Dabei kann ein Seecontainer, ohne ihn abzusetzen, direkt auf dem Eisenbahnwaggon oder Lastkraftwagen be- oder entladen werden. Dadurch werden Zwischenschritte, wie Absacken, manuelles Beladen, mehrfaches Umladen eliminiert und unnötige Zwischentransporte auf der Strasse vermieden.

Die komplette erfindungsgemäße Vorrichtung in der Wechselbrücke kann vom Transport-Lastkraftwagen vor Ort abgesetzt werden, welcher für die Funktion der Vorrichtung nicht erforderlich ist.

Aus der erfindungsgemäßen Vorrichtung ergeben sich eine Reihe weiterer Vorteile:
Durch das Einblasen des losen Schüttgutes mittels Treibluft als Arbeitsluft, vorzugsweise aus einem hochverdichtenden Schraubenkompressor, wird mit der Vorrichtung die vollständige Ausnutzung der Ladekapazität des zu be- oder entladenden Containers bis in die letzte Ecke innerhalb kurzer Zeit ermöglicht.

Da bei diesem Verfahren zumindest eine komplette Verfahrensstufe, nämlich Absackung bzw. Verpackung, entfällt, liegt in diesem Bereich der höchste Einspareffekt bei den Kosten und es ergibt sich darüber hinaus eine verminderte Umweltbelastung.

Die erfindungsgemäße Vorrichtung ermöglicht einen enormen Zeitvorteil, indem ca. 25 Tonnen in weniger als einer Stunde verladen werden können.

Durch das Ansaugen ist es zudem möglich, Bunkersilos, Binnenschiffe, Eisenbahnwaggons oder auch mit Schüttgütern beladene Überseecontainer und dergleichen zu beladen. Ebenso ist umgekehrt auch ein Entladen vorgenannter Transport- oder Lagereinrichtungen möglich.

Darüber hinaus können havarierte Fahrzeuge effektiv, schnell und ohne weitere Materialbeeinträchtigung entladen werden. Weiterhin entfällt umweltschonend ein sehr großer Anteil der Transporte mit Lastkraftwagen auf der Strasse, so dass durch Einsparung von Transportwegen und Verlagerung auf die Schiene und Binnenschiffe Ressourcen geschont werden.

Berechnungen ergaben, dass durch die erfindungsgemäße Be- und Entladevorrichtung ca. 40% an Kosten und ca. 75% an Zeit für die Be- und Entladung sowie den Transport von Schüttgut eingespart werden können.

Die robuste und bedienungssichere Be- und Entladevorrichtung ist nach kurzer Einweisung von Jedermann zu bedienen. Haltbarkeit und Handhabungssicherheit können durch hochwertige Materialien gewährleistet werden.

Ein Einsatz kommt auch für Schwellenländer und Länder der dritten Welt in Frage, da gerade dort teure, stationäre Verladeanlagen kaum oder nicht vorhanden sind. Darüber hinaus wird eine Erschließung neuer Exportpotentiale, auch für kleinere Unternehmen, ermöglicht.

Ferner können neue Märkte erschlossen werden, da bisher die Versendung kleinpreisiger loser Güter an den Transport- und Verladekosten scheiterten, oder lose Güter bisher aus technischen oder rationellen Gründen nicht verladen werden konnten.

Die Geschwindigkeit des Güterumschlages wird erhöht und damit neben der Kosteneinsparung ein volkswirtschaftlicher Impuls mit einer Erhöhung des Bruttosozialproduktes erzielt.

Weitere Merkmale der Erfindung ergeben sich aus den Unteransprüchen.

Um den Container auf der Wechselbrücke einerseits vollständig abschließen zu können, ist an der zumindest einen Stirnseite des Containers ein Rolltor ausgebildet. Es ist aber auch möglich die Stirnseite des Containers stattdessen oder zusätzlich mit einem Dichtrahmen zu versehen, um beim Be- und Entladen eines Behältnisses die Umgebung vom Austreten des Schüttgutes zu sichern. Der Dichtrahmen kann auch als umlaufendes Rampenanfahrkissen dienen, welches das zu be- oder entladende Behältnis und den Container auf der Wechselbrücke vor Beschädigungen bei der Handhabung der Vorrichtung schützt. Es dient auch dazu, einen abgeschlossenen Raum zwischen dem Inneren des Containers in der Wechselbrücke und dem angedockten zu be- oder entladenden Behältnis, z.B. einem Seecontainer, zu bilden. Dieser Raum kann von Außen über eine einklappbare Treppe und Tür zugänglich sein, um nach Andocken des Seecontainers ein Linerbag oder eine Heckverschalung in selbigen einzubringen.

Bei einer vorteilhaften Ausgestaltung der Erfindung ist das teleskopierbare Rohr mit einem Verteilerkopf versehen und aus dem Container in das und aus dem zu be- oder entladenden Behältnis in den Container verfahrbar. Der Verteilerkopf hat die Aufgabe, das aus dem teleskopierbaren Rohr austretende Material optimal über die komplette Breite und Höhe des zu beladenden Containers zu verteilen, um einen gleichmäßigen Füllstand bis an die Containerdecke zu gewährleisten.

Das teleskopierbare Rohr wird mit geringem Abstand zur Containerdecke in horizontaler Mitte in den zu beladenden Container beispielsweise mittels einem Rollenkettenantrieb hinein gefahren und während des Befüllvorganges dem Füllstand des Containers entsprechend zurück teleskopiert. Die Endlagen des teleskopierbare Rohres können mit Näherungsschaltern erfasst werden.

Bevorzugt ist das teleskopierbare Rohr höhenverstellbar ausgebildet. Das Rohr kann in Gleitführungen mittels eines Zahnstangenantriebes in der Höhe verstellt werden, um es den unterschiedlichen Chassishöhen der Containerfahrzeuge, Eisenbahnwaggons oder auf dem Boden stehenden Containern anpassen zu können. Da sich ein luftgefedertes Containerchassis beim Befüllen absenkt, kann über dem teleskopierbaren Rohr ein Näherungsschalter angebracht sein. Senkt sich der zu beladende Container ab, fährt der Zahnstangenantrieb das teleskopierbare Rohr automatisch nach unten, so dass sich der Container nicht auf das teleskopierbare Rohr setzen kann. Das teleskopierbare Rohr wird beispielsweise mittels Drucktastern in den und aus dem zu be- oder entladenden Container ein- und ausgefahren und ist mit Drucktastern in der Senkrechten verstellbar.

Um ein Verschmutzen und damit ein Verklemmen des teleskopierbaren Rohres zu vermeiden, wird während des Füllvorganges regelbare Sperrluft von bis zu 2 bar in das aus mehreren Einzelrohren bestehende teleskopierbare Rohr geleitet. Dazu ist das teleskopierbare Rohr mit einer Spülluftleitung verbunden.

Bei einer vorteilhaften Ausgestaltung der Erfindung ist die Motor-Kompressor-Einheit zur Druckluftspeisung des zu be- oder entladenden Behältnisses mit einem Kühler, vorzugsweise einem Wärmetauscher mit Lüfter, verbunden. Der Kühler kühlt die vom Schraubenkompressor verdichtete Luft ab. Die Luft wird dann als Förderluft für das zu verfüllende Schüttgut eingesetzt.

Die während des Füllvorganges aus einem in dem zu befüllenden Container untergebrachten Linerbag austretende Förderluft gelangt in einen Zwischenraum im Container der erfindungsgemäßen Be- und Entladevorrichtung. Von dort wird sie mittels der Staub und Filteranlage abgesaugt, gereinigt und an die Umgebung abgeführt. Dabei weist die Staubsaug- und Filteranlage einen Zuluftstutzen zum Absaugen von Staub aus dem zu be- oder entladenden Behältnis und einen Abluftstutzen zur Abgabe gereinigter Luft in die Umgebung und einen Staubsammelbehälter auf.

Nach einer weiteren Ausbildung der erfindungsgemäßen Lösung ist das Innere des Containers durch Trennwände zumindest in einen Schleusenraum, in den der Verteilerkopf des teleskopierbaren Rohres hineinragt, einen Maschinenraum mit zumindest dem teleskopierbaren Rohr mit zugehörigem Antriebsaggregat, Staubsaug- und Filteranlage und der Bedien- und Steuereinheit und in einen Motorraum mit zumindest der Motor-Kompressor-Einheit unterteilt. Die Motor-Kompressor-Einheit besteht bevorzugt aus einem Dieselmotor mit einem Schraubenkompressors, der von dem Dieselmotor angetrieben wird und darüber hinaus zum Antrieb für ein Stromaggregat und das Gebläses der Staubsaug- und Filteranlage sorgt. Im Maschinenraum kann zusätzlich ein Kraftstofftank für die Motor-Kompressor-Einheit untergebracht sein. Es ist aber darauf hinzuweisen, dass die Bauteile und Aggregate auch im jeweils anderen Raum im Container der Be- und Entladevorrichtung untergebracht sein können. Eine Saugeinheit zum Absaugen des Schüttgutes z.B. aus einem Silo besteht im Wesentlichen aus einem Zyklonabscheider und einem Sauggebläse.

Damit die erfindungsgemäße Be- und Entladevorrichtung an einem beliebigen Ort aufgestellt werden kann, nachdem sie mit einem Lastkraftwagen zu diesem Ort transportiert wurde, weist die Wechselbrücke eine Mehrzahl von Containerstützen auf. Sind die Containerstützen ausgefahren worden, kann sich der Lastkraftwagen von der Wechselbrücke entkoppeln und entfernen. Soll die Be- und Entladevorrichtung wieder abtransportiert werden, fährt der Lastkraftwagen mit seinem hinteren Ladeteil unter die Wechselbrücke, koppelt sich an diese an, fährt die Containerstützen der Be- und Entladevorrichtung wieder ein und kann diese zu einem anderen Ort transportieren.

Die vorstehend erläuterten Beladevorgänge treffen prinzipiell auch auf Entladevorgänge aus einem Behältnis zu.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Der der Erfindung zugrunde liegende Gedanke wird in der nachfolgenden Beschreibung anhand eines Ausführungsbeispieles, das in den Zeichnungen dargestellt ist, näher beschrieben. Es zeigen:

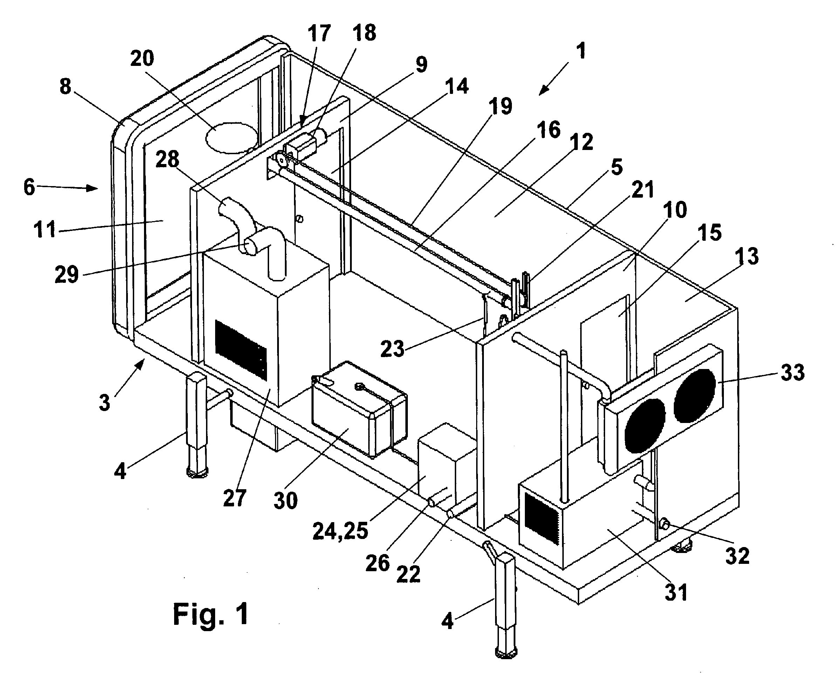

- Fig. 1: eine perspektivische Ansicht einer erfindungsge- mäßen Be- und Entladevorrichtung für Container, Silos und andere Füllräume,
- Fig. 2: eine perspektivische Ansicht der Be- und Entla- devorrichtung mit einem mit Schüttgut zu befül- lenden Container,

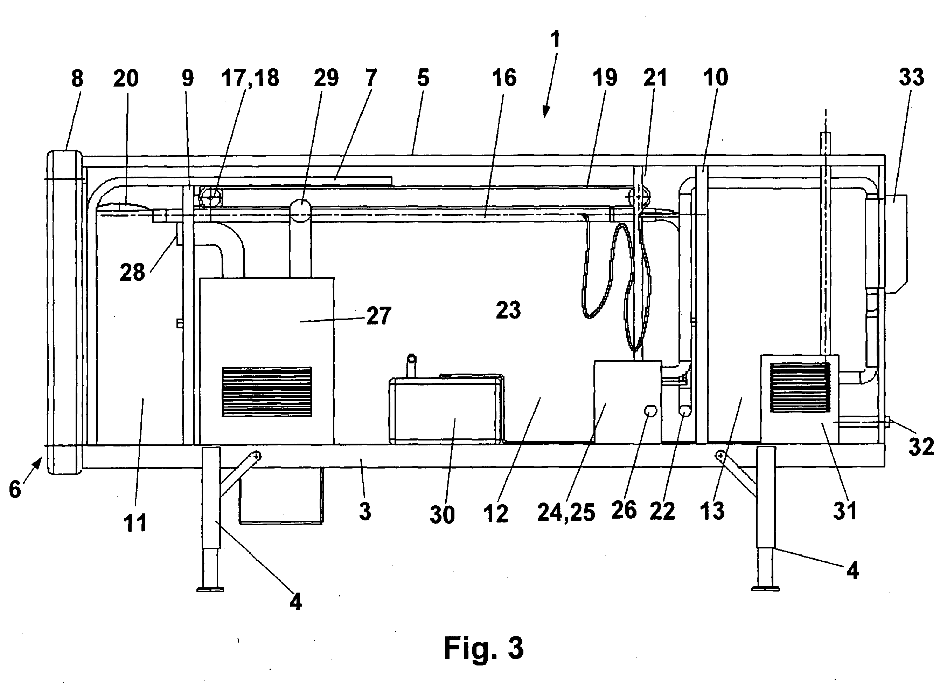

- Fig. 3: eine Seitenansicht der Be- und Entladevorrich- tung gemäß Fig. 1 und

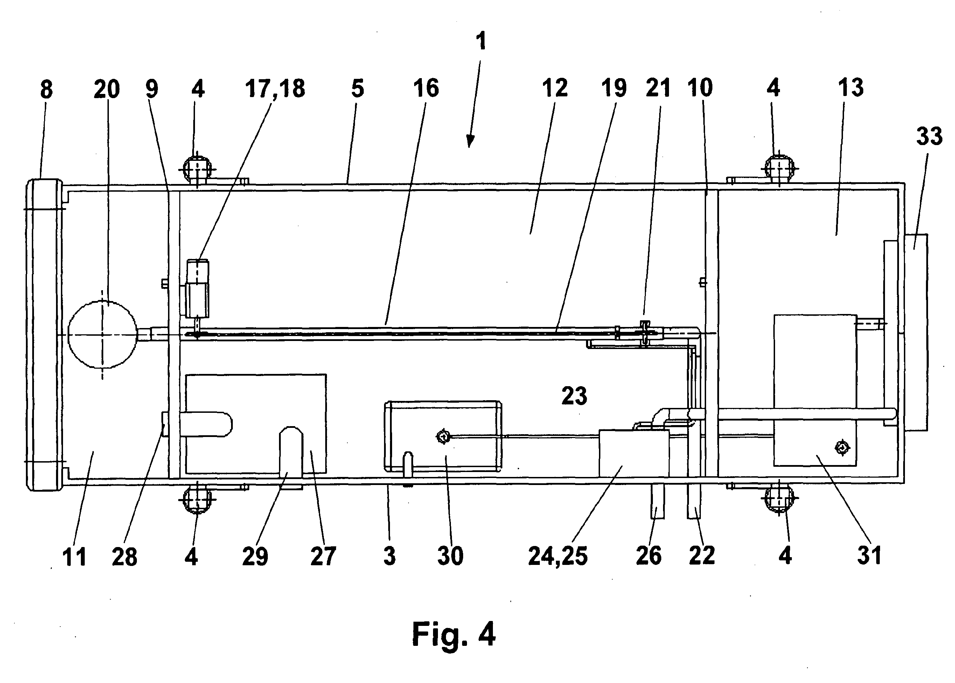

- Fig. 4: eine Draufsicht auf die und Be- und Entladevor- richtung gemäß Fig. 1.

Das folgende Ausführungsbeispiel bezieht sich auf ein mit Schüttgut zu beladendes Behältnis, also den Beladevorgang. Für den Entladevorgang des Behältnisses gilt die Beschreibung in entsprechender Weise.

Die Be- und Entladevorrichtung 1 für ein mit Schüttgut zu beladendes, hier als Container ausgebildetes Behältnis 2 vorgesehen und weist eine an sich bekannte und in der Regel genormte Wechselbrücke 3 auf, an der vier zueinander beabstandete ein- und ausfahrbare Containerstützen 4 angebracht sind, die sich auf einem Boden abstützen.

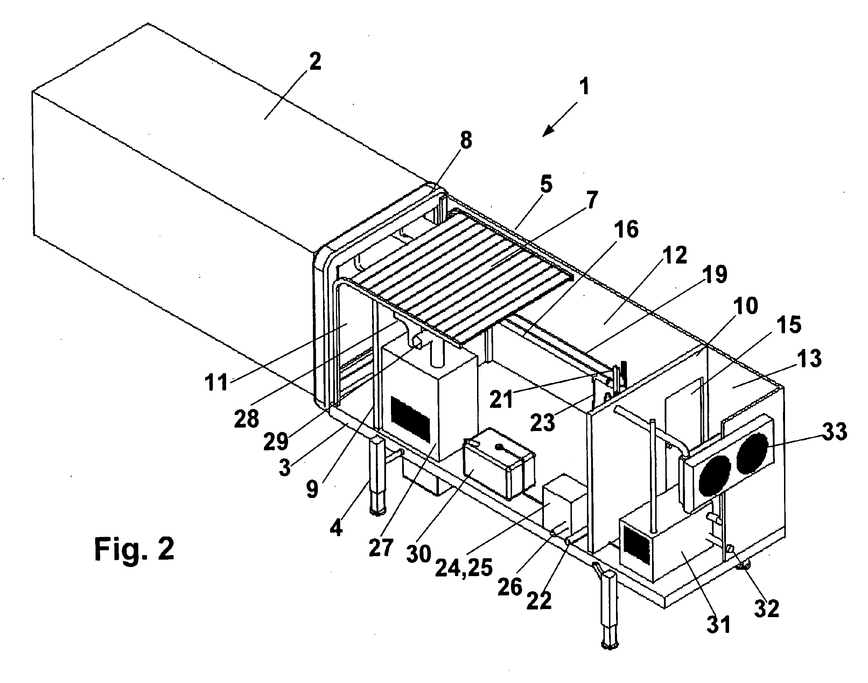

Auf der Wechselbrücke 3 ist ein üblicher Container 5 montiert, dessen eine Stirnseite 6 offen ist. Diese Stirnseite 6 kann aber mit einem Rolltor 7, wie in Fig. 2 gezeigt, verschlossen werden. Weiterhin weist die Stirnseite 6 des Containers 5 einen umlaufenden Dichtrahmen 8 aus einem flexiblen, vorzugsweise Gummimaterial auf, an dem die entsprechende Stirnseite des mit Schüttgut zu beladenden Behältnisses 2 während des Beladevorganges anliegt.

Der Container 5 der Be- und Entladevorrichtung 1 ist in seinem Innenraum durch zwei zueinander beabstandetet Trennwände 9 und 10 in einen Schleusenraum 11, einen Maschinenraum 12 und einen Motorraum 13 unterteilt. Diese Räume können jeweils durch eine in den Trennwänden 9 und 10 eingesetzte Tür 14 bzw. 15 betreten werden.

Im Maschinenraum 12 des Containers 5 ist ein teleskopierbares Rohr 16 unterhalb der Containerdecke angeordnet, das in Richtung des an den Container 5 angedockten und mit Schüttgut zu beladenden Behältnisses 2 mittels eines Antriebsaggregates 17 verfahrbar ist. Das Antriebsaggregat 17 besteht aus einem Getriebemotor 18 mit Kettentrieb 19 zum Vorschub des teleskopierbaren Rohres 16, dass an seinem zum zu beladenden Behältnis 2 gerichteten Ende einen Verteilerkopf 20 für das Schüttgut aufweist. Der Verteilerkopf 20 dient auch gleichzeitig zum Schutz eines im zu beladenden Behältnis 2 eingebrachten, nicht näher dargestellten Linerbag. Weiterhin wird das teleskopierbare Rohr 16 in einer als Zahnstangen ausgebildeten Gleitführung 21 gelagert, in der das Rohr 16 höhenverstellbar ist. Das andere Ende des teleskopierbaren Rohres 16 mündet in einen Anschluss 22 für ein nicht gezeigtes, Schüttgut aufbewahrendes Silo.

Des Weiteren ist das teleskopierbare Rohr 16 mit einer Spülluftleitung 23 verbunden. Die regelbare Spülluft wird während des Füllvorganges mit bis zu 2 bar in das teleskopierbare Rohr 16 geleitet, um ein Verschmutzen und damit ein Verklemmen des teleskopierbaren Rohres 16 zu vermeiden.

Im Maschinenraum 12 des Containers 5 der Be- und Entladevorrichtung 1 ist eine Saugeinheit 24 mit einer Bedien- und Steuereinheit 25 untergebracht, wobei letztere alle notwendigen Apparaturen steuert. Die Saugeinheit 24 besteht im Wesentlichen aus einem nicht näher gezeigten Zyklonabscheider und einem Sauggebläse. Des Weiteren besitzt die Saugeinheit 24 einen Treibluftausgang 26 zum Ausblasen von Treibluft in ein Silo oder Silofahrzeug, um darin befindliches Schüttgut über den Siloanschluss 22 in das teleskopierbare Rohr 16 zu befördern.

Weiterhin ist im Maschinenraum 12 eine Staubsaug- und , Filteranlage 27 angeordnet mit einem Zuluftstutzen 28 zum Absaugen von Staub aus dem Schleusenraum 11 und dem zu beladenden Behältnis 2 und einem Abluftstutzen 29 zur Abgabe gefilterter Luft an die Umgebung.

Ferner ist im Maschinenraum 12 ein Kraftstofftank 30 platziert. Dieser versorgt eine im Motorraum 13 befindliche Motor-Kompressor-Einheit 31 mit Kraftstoff zur Druckluftspeisung in das zu beladende Behältnis 2. Die Motor-Kompressor-Einheit 31 besteht aus einem Dieselverbrennungsmotor mit einem Schraubenkompressor, der von dem Dieselverbrennungsmotor angetrieben wird und dient darüber hinaus zum Antrieb für ein Stromaggregat und das Gebläse der Staubsaug- und Filteranlage 27. Darüber hinaus weist die Motor-Kompressor-Einheit 31 einen Treiblufteingang 32 zum Einblasen von Treibluft aus dem Schüttgut enthaltenden Silo oder Silofahrzeug.

Weiterhin ist im Motorraum 13 ein Kühler 33, nämlich ein Wärmetauscher mit Lüfter untergebracht, der mit der Motor-Kompressor-Einheit 31 verbunden ist. Der Kühler 33 kühlt die vom Schraubenkompressor verdichtete Luft ab. Die Luft wird dann als Förderluft für das zu verfüllende Schüttgut genutzt.

Das zu verladende Schüttgut strömt aus dem unter Druck stehenden Silo durch Schlauch- und Rohrleitungen in das teleskopierbare Rohr 16, welches mit Treibluft, die in ihrer Menge und Druck von der Bedien- und Steuereinheit 25 aus regelbar ist, versorgt wird. Um eine nochmalige Beschleunigung des zu fördernden Schüttgutmaterials zu erreichen, dient zudem die in das teleskopierbare Rohr 16 geförderte Sperrluft. Am Ende des teleskopierbaren Rohres 16 sitzt der Verteilerkopf 20, welcher entsprechend den Anforderungen des Schüttgutes mittels Bajonetverschluss ausgewechselt werden kann. Der Verteilerkopf 20 sorgt für eine gleichmäßige und vollständige Befüllung des Behältnisses 2 bis unter die Behälterdecke.

### Liste der Bezugszeichen

- 1: Be- und Entladevorrichtung
- 2: Behältnis
- 3: Wechselbrücke
- 4: Containerstütze
- 5: Container
- 6: Stirnseite
- 7: Rolltor
- 8: Dichtrahmen
- 9: Trennwand
- 10: Trennwand
- 11: Schleusenraum
- 12: Maschinenraum
- 13: Motorraum
- 14: Tür
- 15: Tür
- 16: teleskopierbares Rohr
- 17: Antriebsaggregat
- 18: Getriebemotor
- 19: Kettentrieb
- 20: Verteilerkopf
- 21: Gleitführung
- 22: Anschluss
- 23: Spülluftleitung
- 24: Saugeinheit
- 25: Bedien- und Steuereinheit
- 26: Treibluftausgang
- 27: Staubsaug- und Filteranlage
- 28: Zuluftstutzen
- 29: Abluftstutzen
- 30: Kraftstofftank
- 31: Motor-Kompressor-Einheit
- 32: Treiblufteingang
- 33: Kühler

## Patentansprüche

1. Be- und Entladevorrichtung (1) für Behältnisse (2), wie Container, Silos und andere Füllräume, **dadurch gekennzeichnet, dass** diese mobil ausgebildet ist, wobei auf einer mit Lastkraftwagen transportierbaren Wechselbrücke (3) ein Container (5) angeordnet ist, dessen eine Stirnseite (6) zu öffnen und zu schließen und an ein zu be- oder entladenden Behältnis (2) für Schüttgut abdichtend anlegbar ist, wobei in dem Container (5) zumindest ein in das zu be- oder entladenden Behältnis (2) teleskopierbares Rohr (16) mit einem zugehörigen Antriebsaggregat (17) und einem Anschluss (22) zum Fördern von Schüttgut in das oder aus dem zu be- oder entladenden Behältnis (2), eine Saugeinheit (24) mit Treibluftausgang (26), eine Motor-Kompressor-Einheit (31) mit Treiblufteingang (32) zur Druckluftspeisung in das zu be- oder entladende Behältnis (2), eine Staubsaug- und Filteranlage (27) und eine Bedien- und Steuereinheit (25) angeordnet sind.

2. Be- und Entladevorrichtung nach Anspruch 1, **dadurch gekennzeichnet, dass** an der zumindest einen Stirnseite (6) des Containers (5) ein Rolltor (7) und/oder Dichtrahmen (8) ausgebildet ist.

3. Be- und Entladevorrichtung nach Anspruch 1, **dadurch gekennzeichnet, dass** das teleskopierbare Rohr (16) mit einem Verteilerkopf (20) versehen ist und aus dem Container (5) in das und aus dem zu be- oder entladenden Behältnis (2) in den Container (5) verfahrbar ist.

4. Be- und Entladevorrichtung nach Anspruch 3, **dadurch gekennzeichnet, dass** das teleskopierbare Rohr (16) höhenverstellbar ist.

5. Be- und Entladevorrichtung nach Anspruch 1, **dadurch gekennzeichnet, dass** das teleskopierbare Rohr (16) mit einer Spülluftleitung (23) verbunden ist.

6. Be- und Entladevorrichtung nach Anspruch 1, **dadurch gekennzeichnet, dass** die Motor-Kompressor-Einheit (31) zur Druckluftspeisung des zu be- oder entladenden Behältnisses (2) mit einem Kühler (33), vorzugsweise einem Wärmerauscher mit Lüfter, verbunden ist.

7. Be- und Entladevorrichtung nach Anspruch 1, **dadurch gekennzeichnet, dass** die Staubsaug- und Filteranlage (27) einen Zuluftstutzen (28) zum Absaugen von Staub aus dem zu be- oder entladenden Behältnis (2) und einen Abluftstutzen (29) zur Abgabe gereinigter Luft in die Umgebung und einen Staubsammelbehälter aufweist.

8. Be- und Entladevorrichtung nach einem der Ansprüche 1 bis 7, **dadurch gekennzeichnet, dass** das Innere des Containers (5) durch Trennwände (9,10) zumindest in einen Schleusenraum (11), in den der Verteilerkopf (20) des teleskopierbaren Rohres (16) hineinragt, einen Maschinenraum (12) mit zumindest dem teleskopierbaren Rohr (16) mit zugehörigem Antriebsaggregat (17,18,19), Staubsaug- und Filteranlage (27) und der Bedien- und Steuereinheit (25) und in einen Motorraum (13) mit zumindest der Motor-Kompressor-Einheit (31) unterteilt ist.

9. Be- und Entladevorrichtung nach Anspruch 1, **dadurch gekennzeichnet, dass** die Wechselbrücke (3) eine Mehrzahl von Containerstützen (4) aufweist.

## Claims

1. Loading and unloading device (1) for cargo containers (2), such as sea containers, silos and other vessels, **characterized by** that it is mobile, whereby a container (5) is arranged on a swap body platform (3) that can be transported by a truck, one end face (6) of which can be opened or closed and can be connected flush to a cargo container (2) for bulk goods to be loaded or unloaded, whereby the device container (5) is equipped with least one telescoping tube (16) that can be inserted into or withdrawn from the cargo container (2) to be loaded or unloaded, an associated motive power aggregate (17) and a connector (22) for the conveyance of bulk goods into or out of the cargo container (2) to be loaded or unloaded, a suction unit (24) with propelling air outlet (26), a motor-compressor unit (31) with propelling air inlet (32) for propelling air supply into the cargo container (2) to be loaded or unloaded, a vacuum and filter system (27) and an operating and control unit (25).

2. Loading and unloading device according to Claim 1, **characterized by** that at least one end face (6) of the containers (5) is equipped with a roller shutter (7) and/or a sealing frame (8).

3. Loading and unloading device according to Claim 1, **characterized by** that the telescoping tube (16) is equipped with a header (20) and is extendable from the container (5) into the cargo container (2) to be loaded and retractable out of the loaded cargo container (2) in the container (5).

4. Loading and unloading device according to Claim 3, **characterized by** that the telescoping tube (16) is vertically adjustable.

5. Loading and unloading device according to Claim 1, **characterized by** that the telescoping tube (16) is connected to a purging air line (23).

6. Loading and unloading device according to Claim 1, **characterized by** that the motor-compressor unit (31) for the compressed air supply to the cargo container (2) to be loaded or unloaded is connected to a cooling unit (33), preferably a heat exchanger with a fan.

7. Loading and unloading device according to Claim 1, **characterized by** that the vacuum and filter system (27) is equipped with a supply air connector (28) for the extraction of dust from the cargo container (2) to be loaded or unloaded and an exhaust air connector (29) for the expulsion of cleaned air to the ambient air, as well as a dust collection container.

8. Loading and unloading device according to one of the Claims 1 to 7, **characterized by** that the interior of the containers (5) is divided by bulkheads (9,10) into at least one air lock compartment (11), into which the header (20) of the telescoping tube (16) protrudes, a machinery compartment (12), containing at least the telescoping tube (16) with associated drive aggregate (17,18,19), a vacuum and filter system (27) and the operating and control unit (25), and a motor compartment (13), containing at least the motor-compressor un (31).

9. Loading and unloading device according to Claim 1, **characterized by** that the swap body platform (3) is equipped with a number of container supports (4).

## Revendications

1. Dispositif de chargement et de déchargement (1) pour contenants (2), tels que conteneurs, silos et autres espaces de remplissage, **caractérisé par le fait que** celui-ci est réalisé de manière à être mobile, sur une plate-forme interchangeable (3) transportable au moyen de camions étant disposé un conteneur (5) dont une face frontale (6) est apte à être ouverte et fermée et peut être appliquée de manière étanche contre un contenant à charger et décharger (2) pour produits en vrac, dans ledit conteneur (5) étant disposés au moins un tuyau (16) apte à être télescopé dans ledit contenant à charger et décharger (2), qui comprend un groupe associé d'entraînement (17) et un raccord (22) pour transporter des produits en vrac dans le contenant à charger et décharger (2) et hors de celui-ci, une unité d'aspiration (24) ayant une sortie d'air propulseur (26), un ensemble moteur-compresseur (31) avec une entrée d'air propulseur (32) pour l'alimentation en air comprimé du contenant à charger et décharger (2), une installation d'aspiration de poussières et de filtration (27) ainsi qu'une unité de manoeuvre et de commande (25).

2. Dispositif de chargement et de déchargement selon la revendication 1, **caractérisé par le fait que** sur ladite au moins une face frontale (6) du conteneur (5) est réalisé(e) une porte roulante (7) et/ou un cadre d'étanchéité (8).

3. Dispositif de chargement et de déchargement selon la revendication 1, **caractérisé par le fait que** ledit tuyau télescopique (16) est muni d'une tête de distribution (20) et peut être déplacé du conteneur (5) dans ledit contenant à charger et décharger (2) et de ce dernier dans ledit conteneur (5).

4. Dispositif de chargement et de déchargement selon la revendication 3, **caractérisé par le fait que** ledit tuyau télescopique (16) est réglable en hauteur.

5. Dispositif de chargement et de déchargement selon la revendication 1, **caractérisé par le fait que** ledit tuyau télescopique (16) est relié à une conduite à air de balayage (23).

6. Dispositif de chargement et de déchargement selon la revendication 1, **caractérisé par le fait que** ledit ensemble moteur-compresseur (31) pour l'alimentation en air comprimé du contenant à charger et décharger (2) est relié à un refroidisseur (33), de préférence à un échangeur de chaleur à ventilateur.

7. Dispositif de chargement et de déchargement selon la revendication 1, **caractérisé par le fait que** ladite installation d'aspiration de poussières et de filtration (27) présente une tubulure d'admission d'air (28) pour aspirer les poussières hors du contenant à charger et décharger (2) et une tubulure d'évacuation d'air (29) pour évacuer de l'air purifié dans l'environnement ainsi qu'un récipient collecteur de poussières.

8. Dispositif de chargement et de déchargement selon l'une quelconque des revendications 1 à 7, **caractérisé par le fait que** l'intérieur du conteneur (5) est divisé par l'intermédiaire de cloisons (9, 10) au moins en un compartiment d'écluse (11) dans lequel se projette la tête de distribution (20) du tuyau télescopique (16), en un compartiment machine (12) comprenant au moins ledit tuyau télescopique (16) avec ledit groupe associé d'entraînement (17, 18, 19), ladite installation d'aspiration de poussières et de filtration (27) et ladite unité de manoeuvre et de commande (25), et en un compartiment moteur (13) comprenant au moins ledit ensemble moteur-compresseur (31).

9. Dispositif de chargement et de déchargement selon la revendication 1, **caractérisé par le fait que** ladite plate-forme interchangeable (3) présente une pluralité de supports de conteneur (4)
